# EUROPEAN PATENT APPLICATION

(11) **EP 2 037 670 A2**
(43) Date of publication of application: **18.03.2009**
(21) Application number: 08252986.8
(22) Date of filing: 10.09.2008
(51) Int. Cl.: H04N 5/232

(54) **Image sensor apparatus and method for embedding image stabilization data into image data**

(30) Priority: 11.09.2007 US 853698
(71) Applicant: OmniVision Technologies, Inc., Sunnyvale, California 94089 (US)
(72) Inventor: Whitcombe, Matthew Colin, Surrey, GU25 4EX (GB)
(74) Representative: Hackney, Nigel John

(57) **Abstract**

An image sensor apparatus comprises an image sensor for generating image data corresponding to an optical image. A movement sensor coupled to the image sensor generates movement data corresponding to movement of the image sensor apparatus. A processor coupled to the image sensor receives embedded image data from the image sensor, where the embedded image data includes the movement data embedded into the image data. The processor processes the embedded image data to generate a movement-compensated digital image.

## Description

This invention relates generally to image stabilization on image sensors. More particularly, this invention relates to an image sensor apparatus and method for embedding image stabilization data into the image data generated by the image sensor.

Image sensors are devices that capture and process light into electronic signals for forming still images or video. Their use has become prevalent in a variety of consumer, industrial, and scientific applications, including digital cameras and camcorders, hand-held mobile devices, webcams, medical applications, automotive applications, games and toys, security and surveillance, pattern recognition, and automated inspection, among others. The technology used to manufacture image sensors has continued to advance at a rapid pace.

There are two main types of image sensors available today: Charge-Coupled Device ("CCD") sensors and Complementary Metal Oxide Semiconductor ("CMOS") sensors. Until recently, the majority of image sensors have been of the CCD type. Early CMOS sensors suffered from poor light sensitivity and high noise levels that restricted their use to only a few low-cost and low-resolution applications. Recent advances in CMOS technology have led to the development of high performance CMOS sensors that are quickly replacing CCDs in a host of other applications, particularly in those where speed, power consumption, size, and on-chip functionality are important factors.

In either type of image sensor, a light gathering photosite is formed on a substrate and arranged in a two-dimensional array. The photosites, generally referred to as picture elements or "pixels," convert the incoming light into an electrical charge. The number, size, and spacing of the pixels determine the resolution of the images generated by the sensor. Modem image sensors typically contain millions of pixels in the pixel array to provide high-resolution images.

To capture color images, each pixel is covered with a color filter, an optical element that only allows penetration of a particular color within given wavelengths of light. A color filter array ("CFA") is built on top of the pixel array for separating color information for each pixel. The most popular type of CFA is called a "Bayer array," composed of alternating rows of Red-Green and Green-Blue filters. The Bayer array has twice as many Green filters as Blue or Red filters to account for the Human Visual System peak sensitivity to the green portion of the light spectrum.

In addition to the CFA, image sensors also have a microlens array. The microlens array has a number of microlenses, one for each pixel. Each microlens in the array focuses the incident light into the photosensitive area of its corresponding pixel and enhance its light-gathering ability, thereby improving the overall sensitivity of the image sensor. The microlens array also improves the fill factor of the image sensor, which refers to the ratio of the photosensitive area inside a pixel to the overall pixel area.

The electronic signals representing the image information captured by the image sensor are typically transmitted to an Image Signal Processor ("ISP") or other Digital Signal Processor ("DSP") where they are converted into digital signals and processed to generate a digital a image. The quality of the digital images generated by the image sensor depends mostly on its sensitivity and other factors, such as lens-related factors (flare, chromatic aberration), signal processing factors, system control-related factors (focusing and exposure error) and time and motion factors.

In particular, physical movement of a device including an image sensor, such as, for example, a digital camera and a camcorder, may make the image generated by the sensor blur in its entirety. Camera movement may be avoided by simply keeping the image sensor device steady for the duration of the exposure, such as by using a tripod. Another strategy is to use faster shutter speeds. When this is not possible, Image Stabilization ("IS") techniques may be used to compensate for movement of the image sensor device, thereby reducing or preventing image blur.

There are three main types of IS techniques available today: (1) Mechanical or Hardware-Based IS techniques; (2) Digital or Software-Based IS techniques; and (3) Hybrid IS techniques that are a combination of Hardware-Based and Software-Based IS techniques. The first type, Hardware-Based IS, typically involves a built-in movement sensor to detect and compensate for any device movement. The built-in movement sensor, commonly referred to as a gyro, detects rotational movement or any angular acceleration of the image sensor device and generates a signal containing movement data. The signal from the gyro is then used to control optical components in the optical assembly of the image sensor device, such as by moving the lenses in the device to redirect the incident light to the same pixels after the device movement as before the movement. As a result, a movement-compensated digital image is generated.

The quality of the movement-compensated digital image generated by a Hardware-Based IS technique depends on how well the optical assembly components are being physically controlled by the movement sensor to compensate for the device movement. The optical assembly may be prone to failure as its components wear out or fail. In addition, the size and mass of the optical components being controlled may limit the speed of operation of these Hardware-Based IS techniques. This may result in unwanted blurring due to the response time of the techniques being too slow to compensate for some types of movements. Furthermore, Hardware-Based IS techniques suffer from their mechanical complexity and therefore may not be suitable for small-scale and portable image sensor devices, such as cell phones and other hand-held mobile devices.

The second type of IS techniques, Software-Based IS techniques, address the mechanical drawbacks of the Hardware-Based IS techniques by performing all IS in software without the use of a movement sensor. These techniques rely solely on IS routines on a microprocessor connected directly to the image sensor to detect movement in the raw pixel data generated by the image sensor. The IS routines process the raw pixel data accordingly to compensate for the detected movement when generating a movement-compensated digital image.

Software-Based IS techniques, while reducing or preventing the mechanical complexities of Hardware-Based IS techniques, suffer from increased software complexity, processing speed, and memory requirements. Their processing and memory requirements may be such so as to prohibit their use in small-scale and portable image sensor devices that operate with low-cost and less powerful microprocessors. Ultimately, however, these techniques offer the potential to be the most effective IS solution as the cost of processing power and memory requirements of microprocessors fall with advances in semiconductor technologies.

Hybrid IS techniques, the third type of IS techniques available today, have been proposed to address the mechanical drawbacks of the Hardware-Based IS techniques while reducing the processing requirements of the Software-Based IS techniques. Hybrid IS techniques, similar to Hardware-Based IS techniques, also involve the use of a built-in movement sensor to detect any device movement and generate a signal containing movement data. The signal is then transmitted to a microprocessor in the image sensor device and used in an IS algorithm, similar to Software-Based IS techniques, to move the image accordingly and compensate for the device's physical movement.

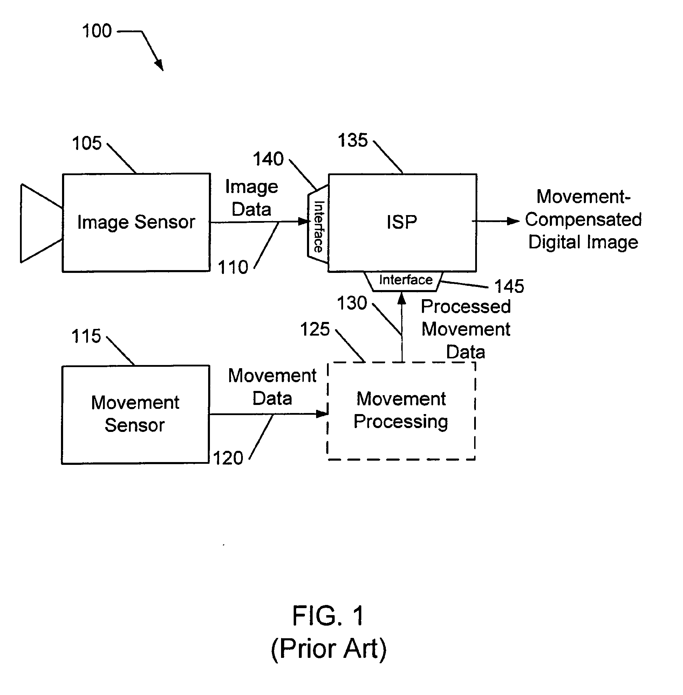

An example of an image sensor device using a Hybrid IS technique is shown in FIG. 1. Image sensor device 100 includes image sensor 105 for receiving light from a light source and generating image data 110 corresponding to an optical image formed from the received light. Image sensor device 100 also includes movement sensor 115 to detect physical movement of device 100 that may affect the quality of the optical image generated by image sensor 105. Movement sensor 115 generates movement data 120 corresponding to the physical movement of device 100. The movement data 120 may optionally be processed further to generate processed movement data 130. Both the image data 110 generated by image sensor 105 and the movement data 120 (or the processed movement data 130) generated by the movement sensor 115 are transmitted to microprocessor 135 via data interfaces 140 and 145, where they are processed by an IS algorithm and other image signal processing routines to generate a movement-compensated digital image.

The quality of the movement-compensated digital image depends in this case on whether the raw pixel data generated by the image sensor and the movement data generated by the movement sensor are synchronized. If the raw pixel data and the movement data are not synchronized, then the IS algorithm in the microprocessor may not be able to compensate for the detected movement. As a result, the image quality may suffer considerably. In addition, because the microprocessor receives data from both the image sensor and the movement sensor, it requires two data interfaces to process the data. This may be a problem again in small-scale and portable image sensor devices, where processing power and cost are major factors.

Accordingly, it would be desirable to provide an image sensor apparatus that addresses the shortcomings of existing image sensor devices that apply Hybrid IS techniques to generate movement-compensated digital images. In particular, it would be desirable to provide an image sensor apparatus that is capable of generating movement-compensated digital images based on raw pixel data from an image sensor and movement data from a movement sensor that are synchronized both temporally and spatially.
Accordingly, in a first aspect, the present invention provides an image sensor according to Claim 1.

Preferably an image sensor apparatus has a movement sensor to generate movement data corresponding to movement of the image sensor apparatus. An image sensor generates image data corresponding to an optical image, receives the movement data from the movement sensor and generates embedded image data having the movement data embedded into the image data. A processor receives the embedded image data from the image sensor and generates a movement-compensated digital image.

An embodiment of the invention includes a method for generating a movement-compensated digital image. Image data is acquired with an image sensor. Movement data is acquired with a movement sensor. The movement data is embedded into the image data at the image sensor to generate embedded image data. The embedded image data is processed to generate the movement-compensated image data.

Another embodiment of the invention includes an image sensor apparatus comprising an image sensor for generating image data. The image sensor includes a data interface to receive movement data from a movement sensor and embed the movement data into the image data to generate embedded image data.

### BRIEF DESCRIPTION OF THE DRAWINGS

The invention is more fully appreciated in connection with the following detailed description taken in conjunction with the accompanying drawings, in which like reference characters refer to like parts throughout, and in which:

FIG. 1 illustrates a prior art image sensor apparatus for generating movement-compensated digital images;

FIG. 2 illustrates an image sensor apparatus constructed according to an embodiment of the invention;

FIG. 3 illustrates a flow chart for generating a motion-compensated digital image with the image sensor apparatus of FIG. 2;

FIG. 4 illustrates an embedded image data according to an embodiment of the invention; and

FIG. 5 illustrates an image sensor for use with the image sensor apparatus of FIG. 2.

### DETAILED DESCRIPTION OF THE EMBODIMENTS OF THE INVENTION

An image sensor apparatus for generating movement-compensated digital images is provided. As generally used herein, an image sensor may be a device or circuitry for capturing and processing a light signal into electronic signals. The electronic signals may be typically processed by an image signal processor ("ISP") or other device or circuitry capable of processing signals into digital images or video. The ISP may include various executable routines for processing signals, including Image Stabilization ("IS") routines for compensating for movement of the image sensor apparatus.

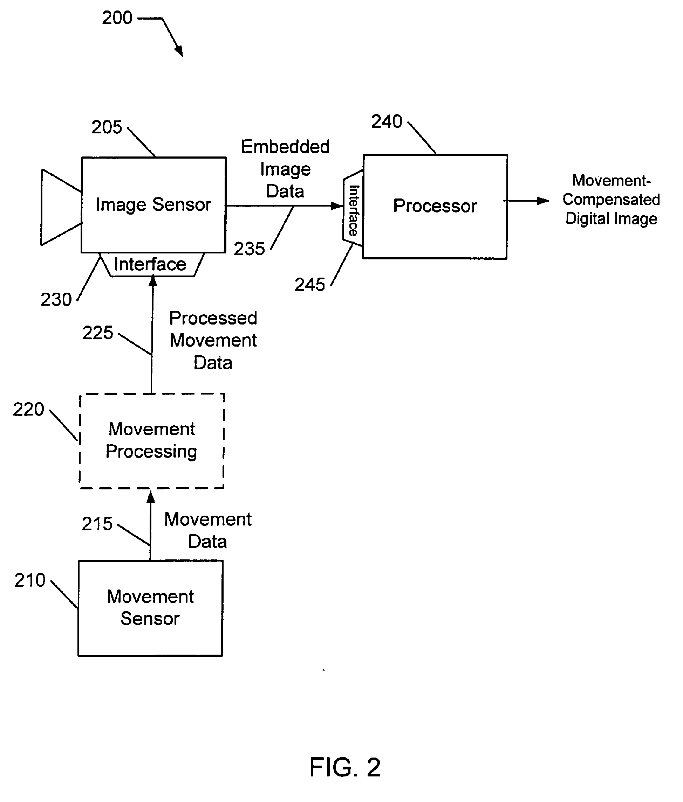

An image sensor apparatus constructed according to an embodiment of the invention is illustrated in FIG. 2. Image sensor apparatus 200 has image sensor 205 for receiving light from a light source and generating image data corresponding to an optical image formed from the received light. The image data includes raw pixel data generated by image sensor 205. The image data may also include blanking intervals, metadata associated with the image sensor, timing data, or any other data associated with the image sensor or a user of the image sensor apparatus.

Image sensor apparatus 200 also includes movement sensor 210 to detect physical movement of apparatus 200 that may affect the quality of the optical image generated by image sensor 205. Movement sensor 210 generates movement data 215 corresponding to the physical movement of device 200. In one exemplary embodiment, the movement sensor may be a gyro. Movement data 215 may be optionally processed further to generate processed movement data 225. For example, movement data 215 may be processed to compensate for the Coriolis effect.

The movement data, i.e., either movement data 215 or processed movement data 225, is then transmitted directly to image sensor 205. The movement data is received at image sensor 205 via a data interface. Data interface 230 receives the movement data and embeds the movement data directly into the image data to generate embedded image data 235. Movement data is embedded so as to be temporally and spatially synchronized with the raw pixel data generated by image sensor 205. For example, the movement data may be embedded into the raw pixel data for an individual image and hence be synchronized to the pixels at a frame level. Other forms of synchronization may be used, such as pixel-by-pixel synchronization or synchronization for a group of pixels. The synchronization occurs concurrently with the acquisition of the image data so that temporal synchronization is automatically achieved without the need to use time-stamps.

It is appreciated that data interface 230 may be an interface built-in at image sensor 205 for receiving the image data from the image sensor 205 and the movement data from movement sensor 215 and embedding the movement data into the image data. The interface may be any kind of data interface capable of receiving two or more data streams and embedding one into another or merging them together.

In one exemplary embodiment, the movement data may be embedded into one or more blanking intervals of the image data. It is appreciated that the movement data may be embedded into the image data in a number of other ways, such as by attaching a header to the image data. For example, where the image data may be compressed at the image sensor 205, the movement data may be embedded into a header of the compressed image data, such as a JPEG header by the use of an image marker code.

The embedded image data 235 is transmitted to processor 240 where it is processed by an IS algorithm and other image signal processing routines to generate a movement-compensated digital image. The embedded image data 235 is received at processor 240 via a single data interface, such as data interface 245. Processor 240 may be a DSP or an ISP having image processing routines for processing and generating digital images. Data interface 245 may be any kind of data interface for receiving data at a processor. It is appreciated that data interface 245 may include routines for pre-processing the received data prior to processing by the IS algorithm and other image processing routines at processor 240.

In one exemplary embodiment, the IS algorithm at processor 240 includes a movement compensation routine for compensating for movement of image sensor apparatus 200. The IS algorithm may remove the embedded movement data from the embedded image data 235 prior to executing the movement compensation routine. Alternatively, the embedded movement data may be removed from the embedded image data 235 at interface 245 prior to execution of the IS algorithm. It is appreciated that the movement data may be used by the movement compensation routine to adjust the image data generated by the image sensor for any physical movement of image sensor apparatus 200.

It is also appreciated that embedding the movement data directly into the image data at the image sensor 205 enables the processor 240 to operate with a single data interface (interface 245), thereby significantly reducing the complexity of processor 240. This may be particularly significant for small-scale and other portable image sensor devices, where processing power, cost, and complexity are major factors. In addition, it is also appreciated that embedding the movement data into the image data at the image sensor 205 significantly improves the temporal and spatial synchronization between the movement data and the raw pixel data. Specifically, synchronization is performed at image sensor 205 instead of processor 240, further reducing the complexity of the IS algorithm executed in processor 240.

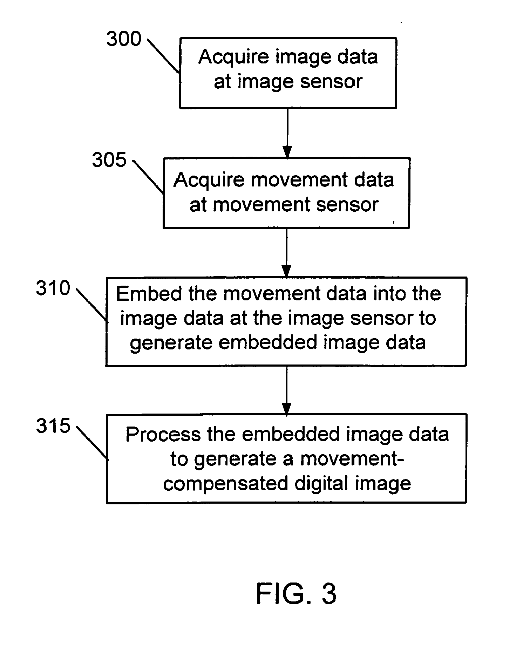

A flow chart for generating a motion-compensated digital image with the image sensor apparatus of FIG. 2 is illustrated in FIG. 3. The motion-compensated digital image is generated by first acquiring image data at the image sensor (300) and movement data at the movement sensor (305). The movement data is embedded into the image data at the image sensor (310) to generate an embedded image data. As described herein above, the movement data is embedded into the image data so as to be temporally and spatially synchronized with the image data. The embedded image data is then processed by an IS algorithm and other image signal processing routines to generate the movement-compensated digital image (315).

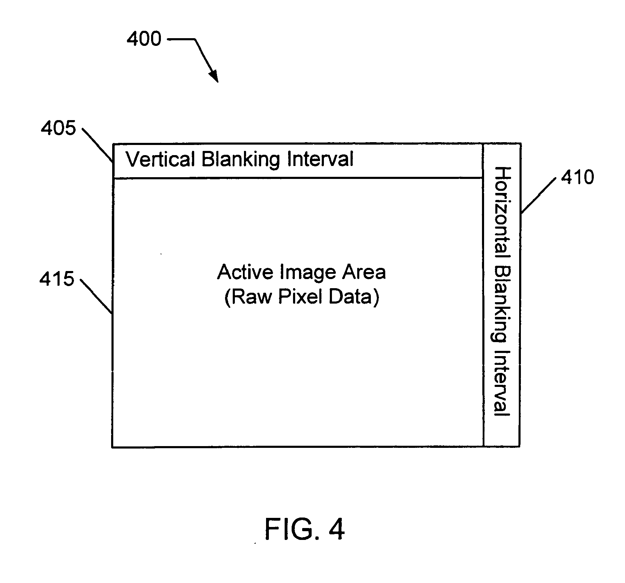

FIG. 4 shows an embedded image data according to an embodiment of the invention. Embedded image data 400 includes two blanking intervals, vertical blanking interval 405 and horizontal blanking interval 410, adjoining active image area 415 containing the raw pixel data generated by the image sensor. The movement data generated by the movement sensor may be embedded into one or both of the blanking intervals.

It is appreciated that embedded image data 400 is shown for illustration purposes only. As described above, the movement data may be embedded into the image data generated at the image sensor in a number of ways, such as, for example, by attaching a header containing the movement data to the image data. It is also appreciated that the embedded image data may also be embedded into a header attached to compressed image data.

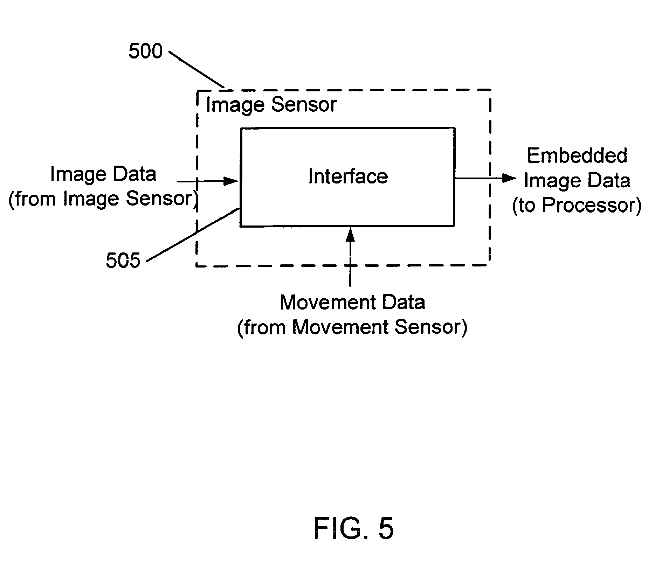

The embedded image data is embedded at an interface of an image sensor, such as the image sensor illustrated in FIG. 5. Image sensor 500 includes interface 505 for receiving image data from the image sensor 500 and movement data from a movement sensor coupled to the image sensor (such as shown in FIG. 2). Interface 505 embeds the movement data into the image data as described herein below to generate the embedded image data that is processed at a processor coupled to the image sensor to generate a movement-compensated digital image.

It is appreciated that interface 505 may be any kind of data interface capable of receiving two or more data streams and embedding one into another or merging them together.

The foregoing description, for purposes of explanation, used specific nomenclature to provide a thorough understanding of the invention. However, it will be apparent to one skilled in the art that specific details are not required in order to practice the invention. Thus, the foregoing descriptions of specific embodiments of the invention are presented for purposes of illustration and description. They are not intended to be exhaustive or to limit the invention to the precise forms disclosed; obviously, many modifications and variations are possible in view of the above teachings. The embodiments were chosen and described in order to best explain the principles of the invention and its practical applications, they thereby enable others skilled in the art to best utilize the invention and various embodiments with various modifications as are suited to the particular use contemplated. It is intended that the following claims and their equivalents define the scope of the invention.

## Claims

1. An image sensor apparatus, comprising:
a movement sensor to generate movement data corresponding to movement of the image sensor apparatus;
an image sensor to generate image data corresponding to an optical image, the image sensor receiving the movement data from the movement sensor and generating embedded image data having the movement data embedded into the image data; and
a processor for receiving the embedded image data from the image sensor and generating a movement-compensated digital image.

2. The image sensor apparatus of claim 1, wherein the movement sensor comprises a gyro.

3. The image sensor apparatus of claim 1, wherein the image sensor comprises a data interface for receiving the image data and the movement data and embedding the movement data into the image data to generate the embedded image data.

4. The image sensor apparatus of claim 1, wherein the embedded image data has embedded movement data temporally and spatially synchronized with the image data.

5. The image sensor apparatus of claim 1, wherein the image data comprises a blanking interval.

6. The image sensor apparatus of claim 5, wherein the movement data is embedded into the blanking interval at the image sensor.

7. The image sensor apparatus of claim 1, wherein the processor is configured to compensate for movement of the image sensor apparatus to generate the movement-compensated digital image.

8. The image sensor apparatus of claim 7, wherein the processor is further configured to remove the movement data from the embedded image data prior to compensating for the movement of the image sensor apparatus.

9. The image sensor apparatus of claim 1, wherein the image data comprises compressed image data.

10. The image sensor apparatus of claim 9, wherein the movement data is embedded into the compressed image data in a header by an image marker code.

11. A method for generating a movement-compensated digital image, the method comprising:
acquiring image data with an image sensor;
acquiring movement data with a movement sensor;
embedding the movement data into the image data at the image sensor to generate embedded image data; and
processing the embedded image data to generate the movement-compensated digital image.

12. The method of claim 11, wherein acquiring movement data comprises using a gyro.

13. The method of claim 11, wherein embedding the movement data into the image data comprises embedding the movement data into a blanking interval of the image data.

14. The method of claim 11, further comprising receiving the movement data at a data interface of the image sensor.

15. The method of claim 14, wherein embedding the movement data comprises generating the embedded image data at the data interface of the image sensor.

16. The method of claim 11, wherein processing the embedded image data comprises compensating for the movement data to generate the movement-compensated digital image.

17. The method of claim 17, wherein processing the embedded image data further comprises removing the movement data from the embedded image data prior to compensating for the movement data.

18. The method of claim 11, further comprising compressing the image data into a compressed image.

19. The method of claim 18, wherein embedding the image data comprises embedding the image data in a header of the compressed image.

20. An image sensor apparatus comprising an image sensor for generating image data, the image sensor having a data interface to receive movement data from a movement sensor and embed the movement data into the image data to generate embedded image data.

21. The image sensor apparatus of claim 20, wherein the movement data is temporally and spatially synchronized with the image data.

22. The image sensor apparatus of claim 20, further comprising a processor to receive the embedded image data into a single data interface and process the embedded image data to generate a movement-compensated digital image.
